# EUROPÄISCHE PATENTANMELDUNG

(11) **EP 3 561 753 A1**
(43) Veröffentlichungstag der Anmeldung: **30.10.2019**
(21) Anmeldenummer: 18169140.3
(22) Anmeldetag: 25.04.2018
(51) Int. Cl.: G06Q 20/32, G06Q 20/40, G06Q 20/42, G06Q 20/08, G06Q 20/38, G06Q 20/02

(54) **DATENÜBERTRAGUNGS- UND VERARBEITUNGSVERFAHREN UND ANORDNUNG HIERFÜR**

(71) Anmelder: CCV Deutschland GmbH, 84072 Au i.d. Hallertau (DE)
(72) Erfinder: Froschermeier, Günther, 93326 Abendsberg (DE)
(74) Vertreter: Heinze, Ekkehard

(57) **Zusammenfassung**

Datenübertragungs- und -verarbeitungsverfahren zur Authentifikation des Inhabers einer Zahlungskarte an einem Händlerendgerät (verschiedenster Ausprägungen), an dem der Inhaber, Kunde, eine kartenbasierte Zahlung ausführen will, mit den Schritten
a) Übermittlung und Verarbeitung der Zahlungskarten-Informationen (PAN-Daten) an/durch das Händlerendgerät
b) Anfrage der dazugehörigen Kunden-PIN vom Händlerendgerät an einen PIN-Handhabungs-Server
c) Anfrage zur Freigabe der Karten-PIN vom PIN-Handhabungs-Server an das Smartphone/Smart-Device des Kunden
d) Authentifikation des Kunden über sein Smartphone
e) Übermittlung eines Signals zur Freigabe der Karten-PIN vom Kunden-Smartphone an den PIN-Handhabungs-Server
f) Verschlüsselte Übermittlung der auf dem PIN-Handhabungs-Server gespeicherten Karten-PIN vom Server an das Händlerendgerät
g) Übermittlung der Karten-PIN vom Händlerendgerät an ein Bankenserversystem zur Onlineprüfung.

## Beschreibung

Die Erfindung betrifft ein Datenübertragungs- und -verarbeitungsverfahren zur Authentifikation des Inhabers einer Zahlungskarte an einem Händlerendgerät, an dem der Inhaber, Kunde, eine kartenbasierte Zahlung ausführen will, sowie eine Anordnung zur Durchführung eines solchen Verfahrens.

Die "elektronische" Bezahlung von Waren oder Leistungen vor Ort, also an der Ladenkasse eines Händlers, mittels einer Bank- bzw. Kreditkarte ist seit langem Standard im alltäglichen Zahlungsverkehr. In den letzten Jahren werden hierbei auch verstärkt Händlergeräte, sogenannte Point-of-Sales(PoS)-Terminals, eingesetzt, die zur Nahfeld-Datenkommunikation mit einer ebenfalls entsprechend ausgestatteten Bankkarte ausgerüstet sind.

Derartige Zahlungsverfahren, die auf kontaktlosen Zahlungskarten (auch EMV Karten genannt) basieren, erlauben derzeit das Weglassen einer Karteninhaber-Authentifikation, zum Beispiel mittels der Karten-PIN/-Geheimzahl, nur bis zu länder-, applikations- und CardScheme-spezifischen Grenzbeträgen.

In Deutschland liegt diese Grenze derzeit bei meistens 25 EUR. Wenn ein Kunde mit einer Zahlungskarte, physisch als Plastikkarte oder tokenisiert auf einem Smartphone kontaktlos, das heißt per ,Near Field Communication' (NFC) bezahlen will, braucht er üblicherweise bis zu einem Betrag von 25 EUR nur seine Karte bzw. sein Phone an ein entsprechendes, NFC fähiges Händlerendgerät (englisch: 'Point-of-Sale' POS Terminal) halten. Bei höheren Beträgen muss er zusätzlich am Händlerendgerät seine Karten-PIN eingeben.

Gemäß einem anderen Modus wird nach mehreren aufeinanderfolgenden Karteneinsätzen ohne PIN Eingabe, wenn deren Anzahl die Zahl 5 oder deren kumulierte Summe 150 EUR übersteigen, die Eingabe der PIN angefordert. Durch die PIN Eingabe werden die Zähler zurückgesetzt, der Karteninhaber kann also dann wieder eine Reihe kleinerer Zahlungen ohne PIN-Eingabe ausführen.

Aus Gründen der Kosteneffizienz und des Vandalismusschutzes wollen Automatenhersteller ihre Automaten (englisch: unattended terminals) mit kontaktlosen Kartenakzeptanzterminals ohne PIN Eingabe-Funktion ausstatten. Die oben aufgeführten Grenzen, die solchen PIN-losen (englisch: NoCVM) Zahlungen auferlegt sind, schränken deren Nutzbarkeit erheblich ein, zum Beispiel, wenn an Elektroladesäulen nicht getankt werden kann oder Tickets im öffentlichen Nahverkehr (englisch Public-Transport) nicht mehr bezahlt werden können, da die sporadisch geforderte PIN-Eingabe nicht möglich ist.

Bestimmte POS Terminalhersteller bieten mobile POS Terminals auf Basis des Smartphones des Händlers (englisch: ,commercial off the shelf, COTS) an. Die Kartenorganisationen erlauben Karten-PIN Eingaben auf einem solchen Händlersmartphone gegenwärtig aus Sicherheitsgründen nur in Verbindung mit einem zusätzlichen, separaten mobilen Endgerät. Das mindert den Vorteil solcher schlanken POS Terminallösungen.

Andere Anbieter pilotieren zur Zeit rein Smartphone (COTS) basierte POS Terminals, allerdings ohne die Möglichkeit einer Karten PIN Eingabe. Hintergrund ist, dass Smartphones (COTS-Devices) nicht die vollen hohen Sicherheitsanforderungen von PCI-PTS zugelassenen Terminals erfüllen und damit das Risiko besteht, dass PIN- und PAN-Daten gleichzeitig (auf der gleichen Hardware) ausgespäht (englisch pishing) und kopiert werden können und damit kriminelle Zahlungen ausgelöst werden können mit Karten-Dubletten.
Der Erfindung liegt daraufhin die Aufgabe zugrunde, ein Datenübertragungs- und -verarbeitungsverfahren und eine entsprechende Anordnung anzugeben, mit denen auf relativ einfache und somit nutzerfreundliche, aber zugleich hohen Sicherheitsanforderungen genügende Art und Weise ein Bezahlvorgang an einem Händlerendgerät ohne vorgangsbezogene Eingabe einer PIN am POS-Terminal autorisiert werden kann.

Diese Aufgabe wird in ihrem Verfahrensaspekt durch ein Verfahren mit den Merkmalen des Anspruchs 1 oder 3 und in ihrem Vorrichtungsaspekt durch eine Anordnung mit den Merkmalen des Anspruchs 11 gelöst. Zweckmäßige Fortbildungen des Erfindungsgedankens sind Gegenstand der abhängigen Ansprüche, und es wird außerdem ein auf dem vorgeschlagenen Datenübertragungs- und -verarbeitungsverfahren beruhendes Bezahlverfahren bereitgestellt.

Die Erfindung schließt den Gedanken ein, die Bequemlichkeit und Nutzerfreundlichkeit eines ohne lokale PIN-Eingabe ablaufenden Bezahlvorganges dadurch weitgehend zu erhalten, dass eine PIN aus einer externen Quelle auf einem hinreichend sicheren, getrennten Übertragungsweg bereitgestellt wird. Hierdurch lässt sich die Sicherheit bei "kleinen" Bezahlvorgängen, die bisher nicht notwendigerweise PIN-gebunden waren bzw. der Grenzbetrag für Bezahlvorgänge, bei denen keine Vor-Ort-Eingabe der PIN durch den Inhaber einer Zahlungskarte erforderlich ist, deutlich erhöhen. Unter einer Zahlungskarte wird hier neben einer physischen Plastikkarte, in der die relevanten Daten auf einem Magnetstreifen, in einem Chip o.ä. gespeichert sind, auch jedes sonstige elektronische Zahlungsmittel verstanden, welches entsprechende Daten enthält und mit dem ein Zahlungsvorgang bargeldlos ausgeführt werden kann. Hierzu zählen etwa entsprechend ausgestattete Smartphones, Smartwatches oder andere SmartDevices, Wearables, die am Körper getragen werden, oder Tags, die etwa an einem Auto oder anderen Fortbewegungsmittel oder sonstigen Gegenständen angebracht sind.

Weiterhin schließt die Erfindung den Gedanken ein, als externe Quelle der PIN einen PIN-Handhabungs-Server in das Verfahren bzw. die Anordnung einzubinden und diesen sowohl eingangsseitig (zum Empfang einer PIN-Anfrage) als auch ausgangsseitig (zur Ausgabe der gespeicherten Karten-PIN) mit dem Händlerendgerät und ausgangsseitig (zum Absetzen einer Authentifikations-Anfrage) wie auch eingangsseitig (zum Empfang von Authentifikationsdaten) mit einem Smartphone des Karteninhabers zu verbinden.

Zur weiteren Erhöhung der Sicherheit des vorgeschlagenen Verfahrens ist in einer Ausführungsform der Erfindung eine Verschlüsselung der auf dem PIN-Handhabungs-Server gespeicherten Karten-PIN standardgemäß mit einem für das anfragende Händlerendgerät spezifischen, kryptografischen Schlüssel und Übermittlung der verschlüsselten Karten-PIN vom PIN-Handhabungs-Server an das Händlerendgerät vorgesehen.

Die Karten-PIN wird dabei Ende-zu-Ende verschlüsselt vom PIN-Handhabungs-Server zum Bankenserversystem übermittelt. Unter einem Bankenserversystem soll hier jegliches Datenhaltungs- und -verwaltungssystem einer Bank, eines sog. Issuers oder Processors oder Acquirers verstanden werden, das zu einer Datenkommunikation und -verarbeitung im Sinne der vorliegenden Erfindung ausgebildet ist. Der PAC (PIN authentication code) wird direkt auf dem HSM des Smart PIN Servers gebildet, so dass auf dem Händlerendgerät niemals die unverschlüsselte PIN verfügbar ist. Der PAC kann in diesem Fall direkt in die Host-Nachricht eingebettet werden.

Ein Smartphone basiertes, vergleichsweise nicht so gut gegen Betrugsangriffe geschütztes Händlerendgerät (COTS-Device) dient in dieser Ausführungsvariante nur als Durchgangskanal und hält die Karten-PIN zu keinem Zeitpunkt unverschlüsselt, so dass ein PIN-Phishing nicht möglich ist und die PCI-PTS PIN Standards erfüllt werden. Ein weiterer Vorteil ist, dass auch in diesem Fall keine Änderung auf Processing-Host-Seite erforderlich ist, d.h. die Lösung völlig autark vom Händlerterminal-Hersteller umgesetzt werden kann.

Gemäß einem relativ unabhängigen Aspekt der Erfindung wird das vorgeschlagene Verfahren mit einer jeweils nur für einen Bezahlvorgang gültigen "dynamischen" Karten-PIN ausgeführt, wobei eine Prüfung der Gültigkeit der dynamischen PIN durch das Bankenserversystem in Kommunikation mit dem PIN-Handhabungs-Server vorgesehen ist. Anstelle der statischen, dem Karteninhaber bekannten Karten-PIN wird in dieser Ausführungsvariante eine ausschließlich für den jeweiligen Bezahlvorgang gültige Karten-PIN verwendet. In Anlehnung an die heute bereits gebräuchliche PAN Tokenisierung kann man hier von eine PIN Tokenisierung sprechen. Der Smart PIN Server übernimmt in diesem Fall die Funktion eines Tokenservers, der dynamische Karten-PINs generiert und Prüfanfragen seitens des Bankenserversystems beantwortet.

In einer weiteren Ausführung des erfindungsgemäßen Verfahrens kann die Authentifikation des Kunden auf dessen Smartphone in Schritt d) durch eine biometrische Prüfung, beispielsweise des Fingerabdruckes oder durch eine Wissensabfrage, beispielsweise einer separaten PIN, eines Codeworts, etc. erfolgen.

In einer weiteren Ausführung des erfindungsgemäßen Verfahrens wird der Kunde in Schritt d) auf seinem Smartphone über Details der anstehenden Transaktion, wie zum Beispiel den Händler, Betrag etc. informiert, bevor dazu aufgefordert wird die Transaktion per Karteninhaber-Authentifikation freizugeben.

In weiteren Ausgestaltungen der Erfindung wird als Händlerendgerät ein Ausgabeautomat für eine Ware oder Leistung oder ein Händler-Smartphone mit einer von der die Zahlungskarte ausgebenden Kartenorganisation zugelassenen mobilen POS App eingesetzt.

Unter Anwendungs-Gesichtspunkten bevorzugt ist weiterhin eine Ausführung, bei der als Zahlungskarte eine zur kontaktlosen Zahlung ausgebildete, insbesondere mit Mitteln zur Nahfeld-, NCF-, Kommunikation ausgebildete Zahlungskarte und ein entsprechend ausgebildetes Händlerendgerät als Touch-Point eingesetzt werden.

In einer Modifikation des vorgeschlagenen Verfahrens und der zugehörigen Anordnung ist die kontaktlose Kunden-Zahlungskarte tokenisiert bzw. virtualisiert auf dem Kunden-Smartphone, einer SmartWatches, eines elektronischen Tags o.ä. implementiert.

Ein unter Einsatz des vorgeschlagenen Datenübertragungs- und Verarbeitungsverfahrens ausgestaltetes Bezahlverfahren weist zusätzliche Schritte auf, die in Anpassung auf den konkreten Bezahlvorgang und Spezifika des Händlerendgerätes ausgestaltet sein können. Im Wesentlichen umfasst ein solcher Bezahlvorgang neben den Schritten zur Authentifikation des Nutzers die folgenden (oder ähnliche) Schritte:
- Eingabe von Details des Bezahlvorganges, insbesondere des Zahlbetrages und optional eines Identifikators der Ware oder Leistung,
- Verarbeitung der elektronischen Zahlung insbesondere nach dem EMV-Standard (siehe EMVCo.com)
- Onlineprüfung der Karten-PIN durch das Bankenserversystem und
- Übermittlung einer Bestätigungs-/Freigabenachricht an das Händlerendgerät durch das Bankenserversystem bei Gültigkeit der Karten-PIN für den Kunden und
- Abschluss des Bezahlvorganges am Händlerendgerät

Nach Obigem ist das Kernstück der vorgeschlagenen Anordnung der erwähnte PIN-Handhabungs-Server, mit seiner empfangs- und sendeseitigen Ausgestaltung zur Kommunikation sowohl mit dem Händlerendgerät (POS) als auch dem Smartphone des Karteninhabers unter Nutzung des Internet und entsprechender Übertragungsprotokolle.

Sofern als Händlerendgerät ein Ausgabeautomat (engl.: vending machine) eingesetzt wird, folgt und auf den Schritt der Beendigung des Bezahlvorganges der weitere Schritt der Ausgabe der Ware oder Leistung.

Vorteile und Zweckmäßigkeiten der Erfindung ergeben sich im Übrigen aus der nachfolgenden Beschreibung von Ausführungsbeispielen anhand der Figuren. Von diesen zeigen:
Fig. 1 eine schematische synoptische Darstellung von Anordnungskomponenten und Verfahrensschritten einer ersten Ausführungsform der Erfindung,
Fig. 2 eine schematische synoptische Darstellung von Anordnungskomponenten und Verfahrensschritten einer zweiten Ausführungsform der Erfindung und
Fig. 3 eine an Fig. 1 angelehnte Darstellung eines beispielhaften Bezahlvorganges an einem Ausgabeautomaten.

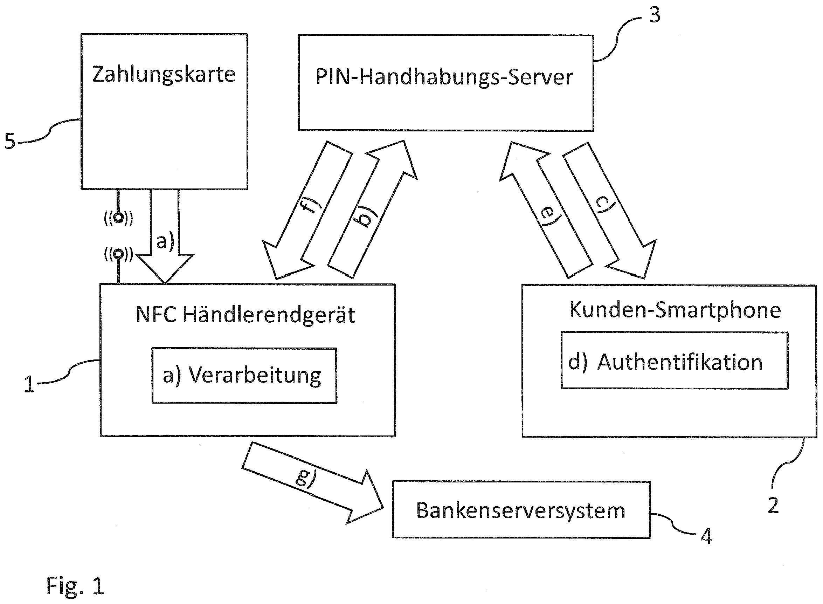

Fig. 1 zeigt schematisch, in Art eines Funktions-Blockschaltbildes, wie im Zusammenwirken eines NFC-fähigen Händlergerätes 1, eines Kunden-Smartphones 2, eines PIN-Handhabungs-Servers 3 und eines Bankenserversystems 4 eine PIN-Autorisierung einer mit einer NFC-Zahlungskarte 5 geleisteten Zahlung am Händlerendgerät vorgenommen wird.

In einem ersten Schritt a) werden von der Zahlungskarte 5 Zahlungskarten-Informationen über eine NFC-Funkstrecke an das Händlerendgerät 1 übermittelt und in diesem verarbeitet. Schritt a) hat also mehrere Teilschritte und ist daher in der Figur zweifach erwähnt. Im Teilschritt der Verarbeitung im Händlerendgerät kann eine Verknüpfung mit Details des anstehenden Zahlungsvorganges und Aufbereitung zur Übermittlung an das Kunden-Smartphone und zur Anzeige von Zahlungsdetails auf diesem erfolgen; dies ist in der Figur der besseren Übersichtlichkeit halber jedoch nicht dargestellt.

In einem Schritt b) wird vom Händlerendgerät 1 unter Nutzung der Zahlungskarten-Informationen eine Anfrage an den PIN-Handhabungs-Server 3 zur Bereitstellung einer dazugehörigen, dort gespeicherten Karten-PIN gerichtet. Der PIN-Handhabungs-Server 3 seinerseits richtet in einem Schritt c) eine Anfrage an das Smartphone 2 zur Freigabe der angeforderten Karten-PIN.

In einem Schritt d) erfolgt im Smartphone 2 eine Authentifikation des Kunden, beispielsweise durch Auswertung eines Fingerabdrucks, Retina-Bildes, Kunden-Passwort oder anderer physiologischer Merkmale, und nach erfolgreicher Authentifikation wird in einem Schritt e) vom Smartphone 2 an den PIN-Handhabungs-Server 3 ein Freigabesignal für die Karten-PIN übermittelt. Soweit nichts anderes vermerkt, werden die hier erwähnten Signal-/Datenübertragungsschritte im Wesentlichen über das Internet unter Nutzung entsprechender Internet-Protokolle ausgeführt, wobei in Teilstrecken der Signalübertragung eine drahtlose Übertragung in einem WLAN oder über ein Mobilfunknetz vorgesehen sein kann.

Aufgrund der erfolgten Freigabe übermittelt in einem Schritt f) der PIN-Handhabungs-Server 3 die verschlüsselte Karten-PIN an das Händlerendgerät 1, und dieses leitet sie in einem Schritt g) zur Online-Prüfung an das Bankenserversystem 4 weiter.

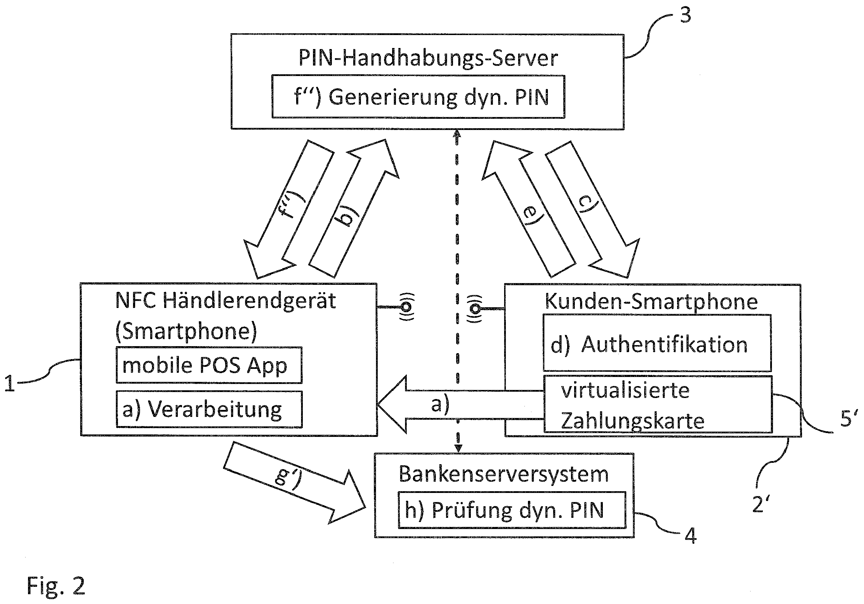

Fig. 2 verdeutlicht in einer an Fig. 1 angelehnten Darstellungsweise den Ablauf in einer modifizierten Anordnung, bei der das Händlerendgerät 1' ein Smartphone mit einer darin installierten zugelassenen Mobile POS App 1a ist und es sich bei der Zahlungskarte 5' um eine virtualisierte Zahlungskarte handelt, die in einem entsprechend modifizierten Kunden-Smartphone 2' implementiert ist.

Dementsprechend wird bei dieser Ausführung das Kunden-Smartphone 2' (das wie praktisch alle modernen Smartphones mit Sende-/Empfangseinrichtungen zur Nahfeld-Datenkommunikation ausgerüstet ist) an das Händler-Smartphone 1' gehalten, um den bidirektionalen Datenübertragungs-Teilschritt des Verfahrensschrittes a) auszuführen.

Des Weiteren ist das Verfahren gegenüber der oben beschriebenen Ausführungsform dahingehend modifiziert, dass in einem Schritt f") eine ausschließlich für den aktuellen Bezahlvorgang gültige "dynamische" Karten-PIN vom PIN-Handhabungs-Server generiert wird. Entsprechend wird anschließend diese dynamische Karten-PIN (natürlich wieder aufgrund einer Freigabe seitens des Kunden über sein Smartphone nach erfolgter Authentifizierung) an das Händlerendgerät 1' und von dort im Schritt g') an das Bankenserversystem übermittelt. Dort erfolgt im Schritt h) eine Prüfung der Gültigkeit der dynamischen PIN im Zusammenwirken mit dem PIN-Handhabungs-Server, welches durch einen gestrichelten Doppelpfeil zwischen dem Bankenserversystem 4 und dem PIN-Handhabungs-Server 3 symbolisiert ist.

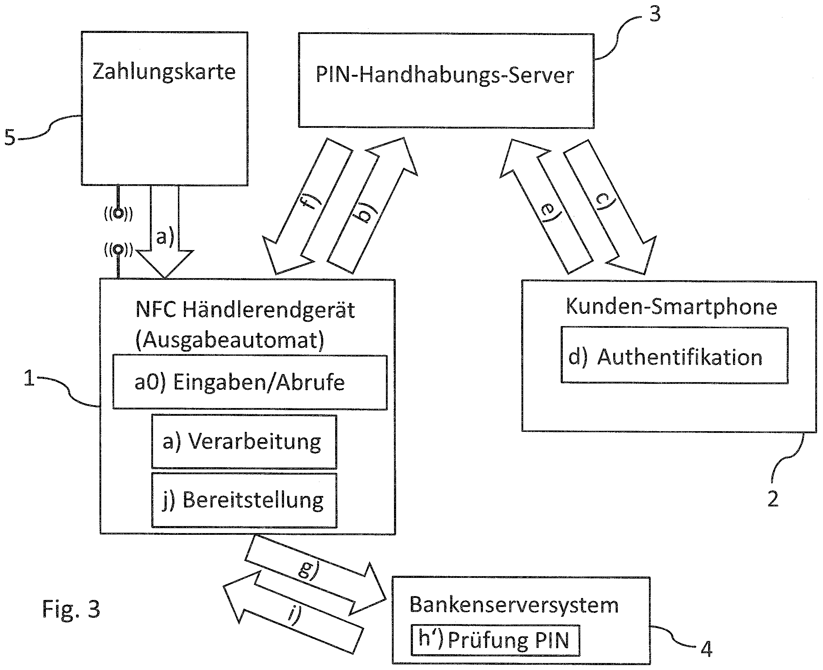

Fig. 3 zeigt, aufbauend auf Fig. 1, beispielhaft den Ablauf eines Bezahlverfahrens unter Einsatz des oben beschriebenen Authentifikationsverfahrens, speziell für ein als Ausgabeautomat 1" ausgebildetes Händlerendgerät.

Zu Beginn der Transaktion werden am Ausgabeautomaten in einem Schritt a0) Details der Transaktion durch den Kunden eingegeben bzw. aufgrund seiner Eingaben im Ausgabeautomaten intern abgerufen. Üblicherweise wird der Ausgabeautomat eine entsprechende bestätigende Anzeige bereitstellen, aufgrund derer der Kunde die Zahlungskarte 5 an den Ausgabeautomaten 1" hält, um die Zahlung auszulösen.

Nachdem die weiter oben erläuterten Übertragungs- und Verarbeitungsschritte abgelaufen sind, erfolgt im Bankenserversystem 4 in einem Schritt h') die Prüfung der (in diesem Falle "statischen") Karten-PIN. Falls diese gültig ist, wird vom Bankenserversystem 4 in einem Schritt i) ein Zahlungs-Bestätigungssignal an den Ausgabeautomaten 1" übermittelt, und aufgrund dieses Signals wird dort intern in einem Schritt j) die Bereitstellung der gewünschten und bezahlten Ware/Leistung ausgelöst.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Datenübertragungs- und -verarbeitungsverfahren zur Authentifikation des Inhabers einer Zahlungskarte an einem Händlerendgerät (verschiedenster Ausprägungen), an dem der Inhaber, Kunde, eine kartenbasierte Zahlung ausführen will, mit den Schritten
a) Übermittlung und Verarbeitung der Zahlungskarten-Informationen (PAN-Daten) an/durch das Händlerendgerät
b) Anfrage der dazugehörigen Kunden-PIN vom Händlerendgerät an einen PIN-Handhabungs-Server
c) Anfrage zur Freigabe der Karten-PIN vom PIN-Handhabungs-Server an das Smartphone/Smart-Device des Kunden
d) Authentifikation des Kunden über sein Smartphone
e) Übermittlung eines Signals zur Freigabe der Karten-PIN vom Kunden-Smartphone an den PIN-Handhabungs-Server
f) Verschlüsselte Übermittlung der auf dem PIN-Handhabungs-Server gespeicherten Karten-PIN vom Server an das Händlerendgerät
g) Übermittlung der Karten-PIN vom Händlerendgerät an ein Bankenserversystem zur Onlineprüfung.

2. Datenübertragungs- und -verarbeitungsverfahren nach Anspruch 1, wobei Schritt f) ersetzt ist durch
f') Verschlüsselung der auf dem PIN-Handhabungs-Server gespeicherten Karten-PIN standardgemäß mit einem für das anfragende Händlerendgerät spezifischen, kryptografischen Schlüssel und Übermittlung der verschlüsselten Karten-PIN vom PIN-Handhabungs-Server an das Händlerendgerät.

3. Datenübertragungs- und -verarbeitungsverfahren zur Authentifikation des Inhabers einer Zahlungskarte an einem Händlerendgerät, an dem der Inhaber, Kunde, eine kartenbasierte Zahlung ausführen will, mit den Schritten
a) Übermittlung und Verarbeitung der Zahlungskarten-Informationen (PAN-Daten) an/durch das Händlerendgerät
b) Anfrage der dazugehörigen Karten-PIN vom Händlerendgerät an einen PIN-Handhabungs-Server
c) Anfrage zur Freigabe der Karten-PIN vom PIN-Handhabungs-Server an das Smartphone des Kunden
d) Authentifikation des Kunden über sein Smartphone
e) Übermittlung eines Signals zur Freigabe der Karten-PIN vom Kunden-Smartphone an den PIN-Handhabungs-Server
f") Generierung einer ausschließlich für den jeweiligen Bezahlvorgang gültigen, dynamischen Karten-PIN und Übermittlung der dynamischen Karten-PIN vom PIN-Handhabungs-Server an das Händlerendgerät
g') Übermittlung der dynamischen Karten-PIN vom Händlerendgerät an ein Bankenserversystem zur Onlineprüfung
h) Prüfung der Gültigkeit der dynamischen PIN durch das Bankenserversystem in Kommunikation mit dem PIN-Handhabungs-Server.

4. Datenübertragungs- und -verarbeitungsverfahren nach einem der vorhergehenden Ansprüche, wobei in Schritt d) die Authentifikation des Kunden auf dessen Smartphone durch eine biometrische Prüfung, beispielsweise des Fingerabdruckes, oder durch eine Wissensabfrage, beispielsweise einer separaten PIN oder ähnlichen Methoden, erfolgt.

5. Datenübertragungs- und -verarbeitungsverfahren nach einem der vorhergehenden Ansprüche, wobei dem Kunden vor Schritt d) auf dessen Smartphone Details des anstehenden Bezahlvorganges, wie zum Beispiel der Händler und der Zahlbetrag angezeigt werden.

6. Datenübertragungs- und -verarbeitungsverfahren nach einem der vorhergehenden Ansprüche, wobei als Händlerendgerät ein Ausgabeautomat für eine Ware oder Leistung oder ein Händler-Smartphone mit einer von der die Zahlungskarte ausgebenden Kartenorganisation zugelassenen mobilen POS App eingesetzt wird.

7. Datenübertragungs- und -verarbeitungsverfahren nach einem der vorhergehenden Ansprüche, wobei als Zahlungskarte eine zur kontaktlosen Zahlung ausgebildete, insbesondere mit Mitteln zur Nahfeld-, NCF-, Kommunikation ausgebildete Zahlungskarte und ein entsprechend ausgebildetes Händlerendgerät eingesetzt werden.

8. Datenübertragungs- und -verarbeitungsverfahren nach einem der vorangehenden Ansprüche, wobei die kontaktlose Kunden-Zahlungskarte tokenisiert bzw. virtualisiert auf dem Kunden-Smartphone implementiert ist.

9. Bezahlverfahren zur Bezahlung einer Ware oder Leistung an einem Händlerendgerät, welches ein Datenübertragungs- und -verarbeitungsverfahren nach einem der vorangehenden Ansprüche einschließt und weiterhin die Schritte
- Eingabe von Details des Bezahlvorganges, insbesondere des Zahlbetrages und optional eines Identifikators der Ware oder Leistung,
- Onlineprüfung der Karten-PIN durch das Bankenserversystem und
- Übermittlung einer Bestätigungs-/Freigabenachricht an das Händlerendgerät durch das Bankenserversystem bei Gültigkeit der Karten-PIN für den Kunden und
- Abschluss des Bezahlvorganges am Händlerendgerät
aufweist.

10. Bezahlverfahren nach Anspruch 9, wobei als Händlerendgerät ein Ausgabeautomat eingesetzt wird und auf den Schritt der Beendigung des Bezahlvorganges der weitere Schritt folgt:
- Ausgabe der Ware oder Leistung.

11. Anordnung zur Durchführung des Verfahrens nach einem der vorhergehenden Ansprüche, umfassend
A) eine Kunden-Zahlungskarte
B) ein Händlerendgerät,
C) einen PIN-Handhabungs-Server
D) ein Kunden-Smartphone oder SmartDevice und
E) ein Bankenserversystem, wobei
- die Kunden-Zahlungskarte zur kontaktgebundenen Kommunikation oder kontaktlosen Nahbereichs-Kommunikation mit dem Händlerendgerät ausgebildet ist,
- das Händlerendgerät zur kontaktgebundenen oder kontaktlosen Nahbereichs-Kommunikation mit der Kunden-Zahlungskarte und zur Kommunikation mit dem PIN-Handhabungs-Server und mit dem Bankenserversystem über das Internet ausgebildet ist,
- der PIN-Handhabungs-Server zur Kommunikation mit dem Händlerendgerät und dem Kunden-Smartphone über das Internet ausgebildet ist,
- das Kunden-Smartphone zur Kommunikation mit dem PIN-Handhabungs-Server über das Internet ausgebildet ist und
das Bankenserversystem zur Kommunikation mit dem Händlerendgerät über das Internet ausgebildet ist.

12. Anordnung nach Anspruch 11, wobei die kontaktlose Kunden-Zahlungskarte tokenisiert bzw. virtualisiert auf dem Kunden-Smartphone implementiert ist.

13. Anordnung nach einem der vorhergehenden Ansprüche, wobei das Händlerendgerät als Smartphone mit einer von der die Zahlungskarte ausgebenden Kartenorganisation zugelassenen mobilen POS App ausgebildet ist.
